(19) Europäisches Patentamt
European Patent Office
Office européen des brevets

(11) **EP 4 382 894 A1**

(12) **EUROPEAN PATENT APPLICATION**
published in accordance with Art. 153(4) EPC

(43) Date of publication:
**12.06.2024 Bulletin 2024/24**

(21) Application number: **21953437.7**

(22) Date of filing: **31.12.2021**

(51) International Patent Classification (IPC):
**G01N 21/76** (2006.01)   **G01N 21/62** (2006.01)
**G01N 27/30** (2006.01)

(52) Cooperative Patent Classification (CPC):
**G01N 21/76; G01N 21/62; G01N 21/69;
G01N 27/30;** G01N 21/05

(86) International application number:
**PCT/CN2021/144005**

(87) International publication number:
**WO 2023/015836 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 07.08.2021   CN 202110905011
10.08.2021   CN 202110915953
11.08.2021   CN 202110921605

(71) Applicant: **Zhejiang University**
**Hangzhou, Zhejiang 310058 (CN)**

(72) Inventors:
• **FENG, Jiandong**
**Hangzhou, Zhejiang 310058 (CN)**
• **DONG, Jinrun**
**Hangzhou, Zhejiang 310058 (CN)**

(74) Representative: **Chung, Hoi Kan**
**Mandarin IP Limited**
**7 Cherry Trees**
**Great Shelford**
**Cambridge CB22 5XA (GB)**

(54) **METHOD FOR ACQUIRING SINGLE PHOTON SIGNALS OF ELECTROCHEMILUMINESCENCE,
IMAGING SYSTEM, AND APPLICATION THEREOF**

(57)     This invention provides a method for collecting signals from single photon or isolated, low quantities of photons through electrochemiluminescence, including an electrochemiluminescent reaction system and a photon signal collection system. In the electrochemiluminescent system, an electrochemiluminescent reaction is initiated. The photon signal collection system is designed to harvest signals from single photon or isolated, low quantities of photons released by the electrochemiluminescent reaction. These signals are generated by single-molecule electrochemical reactions. Furthermore, the invention provides an electrochemiluminescence imaging system and its applications, capable of enhancing the resolution of imaging, surpassing the optical diffraction limit to achieve super-resolution. Images produced by the method described in this invention can achieve resolutions beyond the Abbe diffraction limit.

Figure 1

## Description

## Technical Field

The invention relates to the technical field of electrochemiluminescence detection, in particular to a method for collecting a single photon signal in electrochemiluminescence, imaging system, and application thereof.

## Background

Electrochemiluminescence (ECL) refers to a specific chemiluminescence reaction initiated on an electrode surface by an electrochemical process, essentially involving both electrochemical and chemiluminescent processes. Developed in the early 1990s, this analysis method is highly sensitive. Its working principle is as follows: A specific potential is applied to the working electrode, causing the divalent ruthenium in the tris(bipyridine)ruthenium $[Ru(bpy)_3^{2+}]$ to undergo an oxidation reaction at the electrode surface, losing an electron to become trivalent $[Ru(bpy)_3^{3+}]$. Simultaneously, tripropylamine (TPrA) in the reactants also oxidizes on the electrode surface to become the cationic radical $TPA^{+\bullet}$, which quickly spontaneously loses a proton to form the radical TPA'. Since $Ru(bpy)_3^{3+}$ is a strong oxidizing agent and TPA' is a strong reducing agent, they immediately undergo a redox reaction, resulting in the reduction of $Ru(bpy)_3^{3+}$ to the excited state $Ru(bpy)_3^{2+*}$. The excited state $Ru(bpy)_3^{2+*}$ decays through a radiation transition mechanism, releasing a photon with a central wavelength of 610-620 nm, reverting to the ground state $Ru(bpy)_3^{2+}$ to continue participating in the subsequent electrochemiluminescence reactions on the electrode surface, thus continuously releasing photons. As the photon detector's exposure time increases, the detection signal increases, improving the signal-to-noise ratio and greatly enhancing detection sensitivity. ECL also has the following advantages: there is no radioactive hazard, offers rapid detection speed, and compared to other chemiluminescent systems, the luminophore tris(bipyridine)ruthenium is relatively stable, with stable luminescence intensity over time and more controllable luminescence process. Detection methods in prior art usually employ an electrochemiluminescence reaction cell equipped with a magnetic enrichment electrode, a potentiostat, a single photon counting module, and a signal collection and processing system. The working and counter electrodes in the sample flow cell typically use platinum plates and circular platinum wires, respectively. Quartz fiber bundles with a light-transmitting cross-section of 5 mm$^2$ are used for photon collection and transmission. The single photon counting module integrates a high-sensitivity channel photomultiplier tube, a high-voltage power supply, a signal preamplifier, and a discriminator. It ultimately converts single photon signals into standard TTL pulses, which are then collected by the counting module as digital pulse signals input to a computer. However, the above-mentioned electrochemiluminescence technology based on photomultiplier tubes lacks spatial resolution, cannot directly perform imaging, nor achieve super-resolution imaging beyond the optical diffraction limit.

In conclusion, in prior art, the signal detected through the electrochemiluminescence reaction process is enhanced by repeatedly performing electrochemiluminescence reactions on the electrode surface to generate numerous photons, which are then amplified to enable collection. Moreover, the imaging resolution achieved in prior art is poor, generally reaching only sub-micrometer level imaging, making it difficult to image smaller objects. Resolution refers to the ability to distinguish the smallest object. In practice, it comprises point resolution (the minimum distance to resolve two points), line resolution (the minimum distance between two lines that can be distinguished), and resolution calculated through methods like Fourier ring correlation (FRC). Imaging resolution is often limited by two factors: sampling resolution, the smallest object size that can be distinguished is twice of the pixel size, and the optical diffraction limit, the worst of these resolutions determines the imaging system's resolution. The sampling resolution can be somewhat improved by using higher magnification lenses and photon detectors with smaller pixel sizes. However, the bottleneck caused by the Abbe diffraction limit is difficult to eliminate through conventional imaging methods. Imaging methods capable of breaking through the optical diffraction limit, namely super-resolution electrochemiluminescence imaging, are needed. The optical diffraction limit referred to here is the Abbe diffraction limit, defined as $S=0.61 \times \lambda/NA$, where $\lambda$ is the imaging wavelength and NA is the numerical aperture of the high-power oil immersion objective lens. The Abbe diffraction limit corresponds to 200-400 nanometers in common electrochemiluminescence systems, meaning traditional electrochemiluminescence imaging cannot achieve this limit of spatial resolution (Zhang et al, Annu. Rev. Anal. Chem. 2019. 12:275-95). Therefore, in the field of electrochemiluminescence, developing an imaging method that surpasses the Abbe diffraction limit and significantly enhances resolution is an urgent technical challenge.

## Summary of the Invention

In view of the shortcomings of the prior art, the object of the present invention is to provide a method for collecting a single photon signal in electrochemiluminescence, an imaging system, and application thereof, capable of improving imaging resolution, achieving super-resolution beyond the optical diffraction limit, and ensuring the images obtained through the imaging method proposed by this invention can have resolutions below the Abbe diffraction limit.

To achieve the above objectives, the present invention adopts the following technical solutions:
The present invention provides a method for collecting signals from a single photon or isolated, low quantities of photons through electrochemiluminescence, comprising an electrochemiluminescent reaction system and a photon signal collection system.

The system triggers an electrochemiluminescent reaction.

And the photon signal collection system is configured to collect signals from the single photon or isolated, low quantities of photons released by the electrochemiluminescent reaction, wherein the single photon or isolated, low quantities of photons is originated from single-molecule electrochemical reactions.

Preferably, the electrochemiluminescence reaction system's luminous probe may comprise transition metal coordination compounds like tris(bipyridine)ruthenium or tris(bipyridine)iridium and their derivatives including carboxyl-modified tris(bipyridine)ruthenium, carbon-based materials such as carbon quantum dots, polymer carbon dots, and graphene quantum dots, chemiluminescent probes like luminol, its derivatives, acridinium esters, and their derivatives, polycyclic aromatic hydrocarbons such as 9,10-diphenylanthracene and its derivatives, as well as nanoparticles including gold nanoparticles, quantum dots, metal-organic frameworks, covalent organic frameworks, and luminous materials affixed to nanoparticles.

Preferably, the co-reactant in the electrochemiluminescence reaction system can be reducing agents such as tripropylamine or oxidizing agents such as hydrogen peroxide.

Specifically, for certain reactions that occur through annihilation mechanisms, where the same ion undergoes oxidation and reduction reactions at the anode and cathode respectively, and the oxidized and reduced products can continue to chemically react and emit light, these molecules can be used as luminous probes without adding extra co-reactants, such as tris(bipyridine)ruthenium, 9,10-diphenylanthracene, etc.

Specifically, for some small molecules (molecular weight less than 1000) like luminol and its derivatives, it is possible to design systems that allow the applied voltage to be reduced to 0 V experimentally.

Preferably, the single photon signal collection method involves setting a high numerical aperture objective in the photon signal collection system to collect the single photon signal or isolated, low quantities of photons, which are then captured by photon detectors with high quantum efficiency and low readout noise.

For systems using tris(bipyridine)ruthenium as a luminescent probe, the high quantum efficiency refers to choosing photodetectors with high quantum efficiency at its emission center wavelength.

More preferably, the low readout noise refers to the low readout noise of photodetectors selected during the experiment.

To provide the aforementioned collection method, the invention further provides an imaging system for electrochemiluminescence, comprising: an electrochemiluminescence unit, an optical acquisition unit, and a host computer.

The electrochemiluminescence unit comprises a sample flow cell having reactants that undergo electrochemical reactions within the cell, emitting signals from the single photon or isolated, low quantities of photons.

The optical acquisition unit is positioned corresponding to the sample flow cell and is electrically connected to the host computer. The optical acquisition unit is configured to collect signals from the single photon or isolated, low quantities of photons and sequentially transmits the single photon or isolated, low quantities of photons to the host computer. The host computer is configured to generate images based on the received single photon or isolated, low quantities of photons. The images are super-resolution electrochemiluminescence images, surpassing the Abbe optical diffraction limit in resolution

Preferably, the optical acquisition unit comprises a photon detector and a microscopic imaging system.

The sample flow cell is placed on the microscopic imaging system, and the photon detector is fixed together with the microscopic imaging system and connected to the host computer. The photon detector is configured to collect signals from the single photon or isolated, low quantities of photons generated within the sample flow cell through the microscopic imaging system and transmits the single photon or isolated, low quantities of photons to the host computer.

Preferably, the microscopic imaging system is equipped with an objective lens.

Preferably, the photon detector is an electron-multiplying camera, a complementary metal-oxide-semiconductor camera, a photomultiplier tube, an avalanche photodiode, or a high-sensitivity photoelectric detector and arrays with similar functionality.

Preferably, the electrochemiluminescence unit further comprises: a data acquisition card, a reference electrode, a counter electrode, and a working electrode, or a common electrochemical workstation or a device capable of triggering an electrochemical luminescence reaction through similar voltage application functions.

Preferably, the data acquisition card is interconnected with the reference electrode, the counter electrode, the working electrode, and the host computer, with the reference electrode, the counter electrode, and the working electrode positioned on the sample flow cell.

Preferably, the data acquisition card is configured to send voltage signals to the working electrode and the counter electrode, and to collect the current information of the electrochemiluminescence unit through the counter electrode, to transmit the current information to the host computer.

Preferably, the electrochemiluminescence unit further comprises a current amplifier.

The counter electrode is electrically connected to the data acquisition card through the current amplifier, facilitating the transmission of current information from the electrochemiluminescence unit to the acquisition card.

Preferably, a preset voltage value is stored in the host computer.

The data acquisition card collects the voltage across the reference electrode and the working electrode and sends the collected voltage value to the host computer. The host computer compares the voltage value from the data acquisition card with the preset voltage value and controls the data acquisition card based on the comparison result to adjust the analog voltage signal sent to the working electrode and the counter electrode.

The present invention further provides an imaging method for electrochemiluminescence, implemented based on the aforementioned method for collecting signals from a single photon, using any of features of the imaging system for electrochemiluminescence described above, comprising the imaging steps:

S100, sequentially and continuously collecting, by the optical acquisition unit, the spatial position information of the single photon or isolated, low quantities of photons generated at the first moment, the second moment, ..., the Nth moment within the sample flow cell, and consecutively transmitting the spatial position information of the single photon or isolated, low quantities of photons to the host computer;

S200, processing, by the host computer, the received spatial position information of the single photon or isolated, low quantities of photons generated at the first, second, ..., the Nth moment to produce an image; the image is a super-resolution image of electrochemiluminescence, with a resolution surpassing the Abbe diffraction limit of optical imaging.

N is an integer greater than 1.

Preferably, the imaging steps comprising the following step:

S100, sequentially and continuously collecting, by the optical acquisition unit, the

spatial position information of the single photon or isolated, low quantities of photons generated at the first moment comprises the pixel of the single photon or isolated, low quantities of photons at the first moment and the grayscale values of multiple adjacent pixels; the collected spatial position information of the single photon or isolated, low quantities of photons generated at the second moment comprises the pixel of the single photon or isolated, low quantities of photons at the second moment and the grayscale values of multiple adjacent pixels; ... ; the collected spatial position information of the single photon or isolated, low quantities of photons generated at the Nth moment comprises the pixel of the single photon or isolated, low quantities of photons at the Nth moment and the grayscale values of multiple adjacent pixels, and consecutively transmitting the aforementioned spatial position information to the host computer.

Preferably, step S200 comprises:

S210, processing, by the host computer, fitting the spatial position information of the single photon or isolated, low quantities of photons at the first moment, comprising the pixel and grayscale values of adjacent pixels, with a two-dimensional Gaussian or a similar function possessing spatial localization capabilities, to obtain the spatial position information of the single photon at the first moment; fitting the spatial position information of the single photon or isolated, low quantities of photons at the first moment, comprising the pixel and grayscale values of adjacent pixels, with a two-dimensional Gaussian or a similar function possessing spatial localization capabilities, to obtain a second position coordinate of the single photon at the second moment; ...; fitting the pixel and grayscale values of adjacent pixels of the single photon at the Nth moment with a two-dimensional Gaussian or a similar function possessing spatial localization capabilities, to obtain a N*th position coordinate of the single photon at the Nth moment, and receiving the aforementioned spatial position information to producing an image. The image is a super-resolution image of electrochemiluminescence, with a resolution surpassing the Abbe diffraction limit of optical imaging.

N is an integer greater than 1.

Preferably, in step S100, the collected spatial position information of the single photon or isolated, low quantities of photons generated at the first moment comprises the pixel of the single photon or isolated, low quantities of photons at the first moment and the grayscale values of multiple adjacent pixels; the collected spatial position information of the single photon or isolated, low quantities of photons generated at the second moment comprises the pixel of the single photon or isolated, low quantities of photons at the second moment and the grayscale values of multiple adjacent pixels; ... ; the collected spatial position information of the single photon or isolated, low quantities of photons generated at the Nth moment comprises the pixel of the single photon or isolated, low quantities of photons at the Nth moment and the grayscale values of multiple adjacent pixels.

Preferably, step S200 includes:

S210, fitting the spatial position information of the single photon or isolated, low quantities of photons at the first moment, comprising the pixel and grayscale values of adjacent pixels, with a two-dimensional Gaussian or a similar function possessing spatial localization capabilities, to obtain the spatial position information of the single photon at the first moment; fitting the spatial position information of the single photon or isolated, low quantities of photons at the first moment, comprising the pixel and grayscale values of adjacent pixels, with a two-dimensional Gaussian or a similar function possessing spatial localization capabilities, to obtain a second position coordinate of the single photon at the second moment; ...; fitting the pixel and grayscale values of adjacent pixels of the single photon at the Nth moment with a two-dimensional Gaussian or a similar function possessing spatial localization capabilities, to obtain a N*th position coordinate of the single photon at the Nth moment;

Preferably, S220, based on the first, the second, ..., the Nth position coordinates, generating an image by overlaying the spatio-temporal positions of the single photon or isolated, low quantities of photons, resulting in a super-resolution image of electrochemiluminescence that breaks the spatio-temporal resolution limits of the Abbe optical diffraction limit, in which the single photon corresponds to the first position coordinate at the first moment, progresses to the second position coordinate at the subsequent moment, and so on, until reaching the Nth position coordinate at the Nth moment.

Preferably, step S210 further comprises: analyzing the standard deviation corresponding to the position coordinates of the single photon or isolated, low quantities of photons at each moment or certain moments, accumulating signals after fitting, merging identical signals, and noise reduction processing, thereby determining the position coordinates of the single photon at different times and generating a super-resolution image of electrochemiluminescence.

Preferably, after the imaging steps, resolution determination steps are performed.

The resolution determination steps comprise:

S 100', grouping the first position coordinate, the second position coordinate, ..., and the Nth position coordinate into two statistically significant sets:

$$FRC(q) = \frac{\sum \vec{q} \in circle\ \hat{f}_1(\vec{q})\ \hat{f}_2(\vec{q})^*}{\sqrt{\sum \vec{q} \in circle\ \left|\hat{f}_1(\vec{q})\right|^2}\ \sqrt{\sum \vec{q} \in circle\ \left|\hat{f}_2(\vec{q})\right|^2}}$$

where $\hat{f}_1(\vec{q})$ and $\hat{f}_2(\vec{q})$ are respectively the statistical correlations after Fourier transform of two sets with statistical significance in a constant circular space of size $q$, and $q = |\vec{q}|$ .

S200', calculating the *FRC(q)* curve and taking the horizontal coordinate value corresponding to 1/e of the curve as the calculated spatial frequency. The resolution is obtained by taking its reciprocal (Nieuwenhuizen et al, Nature Methods, 2013, 10, 557-562).

Preferably, the optical acquisition unit comprises a photon detector and an inverted microscope.

The sample flow cell is placed on the inverted microscope, and the photon detector is fixed together with the inverted microscope and connected to the host computer. The photon detector is configured to collect signals from the single photon or isolated, low quantities of photons generated within the sample flow cell through the inverted microscope and transmits the single photon or isolated, low quantities of photons to the host computer. The inverted microscope is equipped with a high-power oil immersion objective lens.

In the process of determining resolution, following step S200', the procedure comprises:

S300', comparing the resolution *FRC(q)* calculated in step S200' with the Abbe diffraction limit S. If *FRC(q) < S*, it is considered super-resolution;

where *S=0.61×λ/NA*, $\lambda$ is the imaging wavelength, *NA* is the numerical aperture of the high-power oil immersion objective lens.

Preferably, prior to the imaging steps, an electrochemical detection step is performed.

The electrochemical detection step comprises:

S100", applying, by the electrochemiluminescence unit, voltage to the sample flow cell to induce electrochemical reactions in the reactants within the cell, releasing single photon or isolated, low quantities of photons; and
S200", collecting, by the electrochemiluminescence unit, current information from the sample flow cell and transmits this information to the host computer.

Preferably, the electrochemiluminescence unit further comprises: a data acquisition card, a reference electrode, a counter electrode, and a working electrode.

The data acquisition card is electrically connected to the reference electrode. The counter electrode, the working electrode, and the host computer, the reference electrode, the counter electrode, and the working electrode are positioned on the sample flow cell.

Step S100" comprises the data acquisition card outputting analog voltage signals to both ends of the working electrode and the counter electrode.

Step S200" comprises the data acquisition card collecting the current information of the electrochemiluminescence unit through the counter electrode and transmitting this current information to the host computer.

Preferably, the electrochemiluminescence unit further comprises a current amplifier, with the counter electrode electrically connected to the data acquisition card through the current amplifier.

Step S200" comprises the current information of the electrochemiluminescence unit being amplified by the current amplifier before being transmitted to the data acquisition card.

Preferably, a preset voltage value is stored in the host computer.

Step S100" comprises the data acquisition card collecting the voltage across the reference electrode and the working electrode and sending the collected voltage value to the host computer. The host computer compares the voltage value from the data acquisition card with the preset voltage value and controls the data acquisition card based on the comparison result to adjust the analog voltage signal sent to the working electrode and the counter electrode.

The electrochemiluminescence imaging system and method of the invention, by adopting the technical solution of continuously collecting the single photon information by the optical acquisition unit and sequentially sending it to the host computer, the host computer generating images based on the sequential a single photon information sent by the optical acquisition unit, enable a single photon detection, thereby improving imaging resolution, achieving super-resolution beyond the optical diffraction limit. The images are super-resolution electrochemiluminescence images. The technology of the invention can be applied to micro-nanoscale spatially resolved electrochemical measurements, micro-nanostructure imaging, catalyst characterization, surface chemical structure characterization, biological imaging, immunodetection, etc., providing super-resolution electrochemical images with ultra-high sensitivity and spatial-temporal resolution realized by the invention.

The present invention further provides a method for electrochemical measurement at the micro and nano scale. The method includes: using the aforementioned method for collecting signals from the single photon or isolated, low quantities of photons through electrochemiluminescence; or employing any one of the aforementioned electrochemiluminescence imaging system; or employing any one of the aforementioned electrochemiluminescence imaging method. Preferably, the electrochemical measurement method utilizes the single-photon signal collection and the electrochemiluminescence imaging method for optical signal reading in electrochemical measurement of current, potential, and other parameters.

The present invention further provides a method for imaging micro and nanostructures. The method includes: using the aforementioned method for collecting signals from the single photon or isolated, low quantities of photons through electrochemiluminescence; or employing any one of the aforementioned electrochemiluminescence imaging system; or employing any one of the aforementioned electrochemiluminescence imaging method. Preferably, the micro and nanostructures can serve as electrode materials or materials loaded on electrodes for collecting signals from the single photon or isolated, low quantities of photons through electrochemiluminescence.

The present invention further provides a method for characterizing catalysts. The method includes: using the aforementioned method for collecting signals from the single photon or isolated, low quantities of photons through electrochemiluminescence; or employing any one of the aforementioned electrochemiluminescence imaging system; or employing any one of the aforementioned electrochemiluminescence imaging method.

The present invention further provides a method for characterizing chemical structures on surfaces. The method includes: using the aforementioned method for collecting signals from the single photon or isolated, low quantities of photons through electrochemiluminescence; or employing any one of the aforementioned electrochemiluminescence imaging system; or employing any one of the aforementioned electrochemiluminescence imaging method.

The present invention further provides a method for biological imaging. The method includes: using the aforementioned method for collecting signals from the single photon or isolated, low quantities of photons through electrochemiluminescence; or employing any one of the aforementioned electrochemiluminescence imaging system; or employing any one of the aforementioned electrochemiluminescence imaging method.

The present invention further provides an immunodetection method. The method includes: using the aforementioned method for collecting signals from the single photon or isolated, low quantities of photons through electrochemiluminescence; or employing any one of the aforementioned electrochemiluminescence imaging system; or employing any one of the aforementioned electrochemiluminescence imaging method.

The present invention further provides a single-photon source or quantum light source based on chemiluminescence reactions. The single-photon source or quantum light source comprise a chemiluminescence reaction system, which is capable of emitting the single photon signal only during its spontaneous emission lifetime. The chemiluminescence reaction system undergoes a chemiluminescence reaction, and by controlling parameters such as the concentration of reactants and/or temperature among other reaction conditions within the chemiluminescence reaction, realizing the emission of the single photon signal during the spontaneous emission lifetime. Preferably, the chemiluminescence reaction is an electrochemiluminescence reaction, wherein the emission of the single photon signal during the spontaneous emission lifetime is achieved by controlling at least one of the reaction condition parameters such as the concentration of reactants, temperature, electrode activity, voltage, and mode of voltage application in the electrochemiluminescence reaction. Preferably, the reactants in the electrochemiluminescence reaction are a tris(bipyridine)ruthenium-tripropylamine system, with the concentration of tris(bipyridine)ruthenium ranging from 1 picomolar per liter to 2 millimolar per liter. The concentration of tripropylamine ranging from 1 picomolar per liter to 200 millimolar per liter.

The beneficial effects of the present invention are the first to use imaging with time and spatial resolution of a single photon signal or isolated, low quantities of photons generated by single molecule electrochemical luminescent reactions, achieving electrochemiluminescence super-resolution imaging that breaks through the Abbe diffraction limit. It breaks through the important bottleneck of existing electrochemiluminescence technology. The technology of the invention can be applied to micro-nanoscale spatially resolved electrochemical measurements, micro-nanostructure imaging, catalyst characterization, surface chemical structure characterization, biological imaging, immunodetection, etc., providing super-resolution electrochemical images with ultra-high sensitivity and spatial-temporal resolution realized by the invention.

**Brief Description of the Drawings**

Figure 1 is a schematic diagram of the electrochemiluminescence imaging system in Example 1.
Figure 2 is a comparison chart between the signal detection sensitivity limit of the invention and fluorescence technology.
Figure 3 is a result chart of a single photon signal collected by the invention with high time resolution.
Figure 4 is a flow chart of the electrochemiluminescence imaging method in Example 2.
Figure 5 is a schematic diagram comparing electrochemiluminescence detection imaging in existing technology with the single photon collection imaging method of the invention.
Figure 6 is a result chart of imaging experiments for micro-nanostructures described in Example 3.
Figure 7 is a schematic diagram illustrating the principle of label-free electrochemiluminescence imaging of cell adhesion in Example 4.
Figure 8 is an imaging result chart of living cells using the method of the invention.
Figure 9 is a comparison chart between bright-field optical imaging and super-resolution electrochemiluminescence imaging of fixed cells.
Figure 10 is a comparison chart of the same cells' bright-field optical image, super-resolution electrochemiluminescence image, and super-resolution fluorescence imaging image realized by the invention.
Figure 11 is a result chart of micro-nanoscale electrochemical measurements in Example 5.
Figure 12 is a result chart of catalyst activity assessment in Example 6.
Figure 13 is a result chart of ultra-high sensitivity single molecule detection in Example 7.
Figure 14 is a result chart of a single photon emission from chemiluminescent reactions.

In the drawings: 1-electrochemiluminescence unit; 11-sample flow cell; 12-data acquisition card; 13-reference electrode; 14-counter electrode; 15-working electrode; 16-current amplifier; 2-optical acquisition unit; 21-photon detector; 22-inverted microscope; 3-host computer.

**Detailed Description of the Invention**

To make the objectives, technical solutions, and advantages of the invention clearer and more comprehensible, the invention will be further elaborated below in conjunction with the drawings and examples. It should be understood that the specific examples described here are only used to explain the invention and are not intended to limit the invention.

**Embodiment 1: Collection of a single photons Generated by Single Molecule Electrochemical Luminescent Reactions**

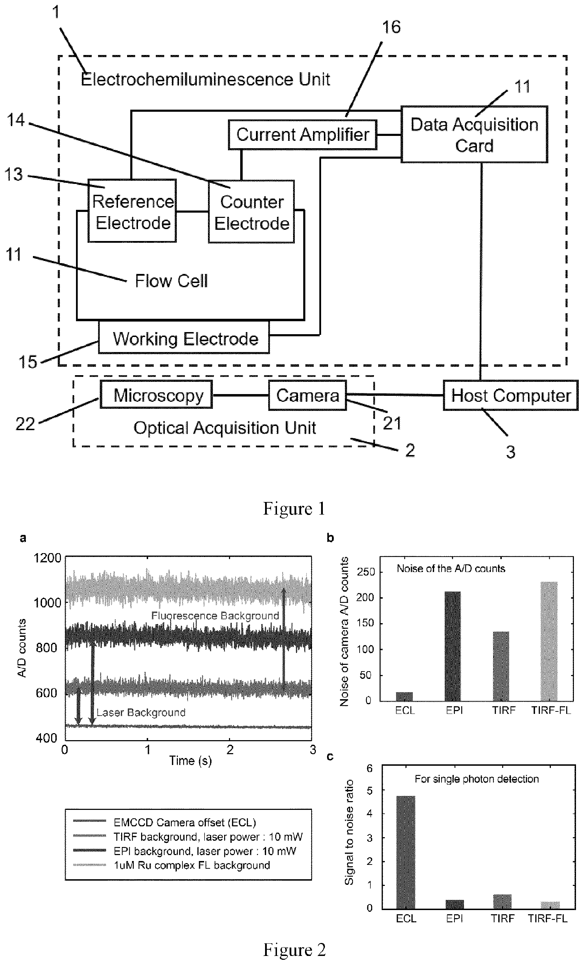

As shown in Figure 1, the invention provides an electrochemiluminescence imaging system, including: an electrochemiluminescence unit 1, an optical acquisition unit 2, and a host computer 3. The electrochemiluminescence unit 1 comprises an internally filled sample flow cell 11 with reactants that can undergo electrochemical reactions within the sample flow cell 11 and release photons. The optical acquisition unit 2 is set in a position corresponding to the sample flow cell 11 and electrically connected to the host computer 3. The optical acquisition unit 2 continuously collects a single photon information and sequentially sends it to the host computer 3, and the host computer 3 generates images based on the single photon information sequentially sent by the optical acquisition unit 2. The reactants here are the tris(bipyridine)ruthenium-tripropylamine system, where the tris(bipyridine)ruthenium concentration range: 1 picomolar per liter to 2 millimolar per liter; tripropylamine concentration range: 1 picomolar per liter to 200 millimolar per liter; exposure time range: 10 microseconds to 50 milliseconds. The oxidation-reduction reaction mechanism is as follows:

$$Ru(bpy)_3^{2+} - e^- \rightarrow Ru(bpy)_3^{3+}$$

$$Ru(bpy)_3^{3+} + TPrA \rightarrow Ru(bpy)_3^{2+} + hv$$

where hv indicates the generated photon. Wherein, a single tris(bipyridine)ruthenium molecule is first oxidized by a heterogeneous electrochemical reaction on the surface of the indium tin oxide (ITO) working electrode and then reduced back to the divalent excited state by the tripropylamine radical in the solution, emitting a photon with energy of about 2 electron volts.

By using the optical acquisition unit 2 to continuously collect a single photon information and sequentially send it to the host computer 3, which generates images based on the single photon information sequentially sent by the optical acquisition unit 2, enhancing imaging resolution, achieving super-resolution beyond the optical diffraction limit.

Specifically, as shown in Figure 1, the optical acquisition unit 2 comprises a photon detector 21 and an inverted microscope 22. The sample flow cell 11 is placed on the inverted microscope 22, where the inverted microscope 22 is equipped with a high-power oil immersion lens. The photon detector 21 is fixed together with the inverted microscope 22 and electrically connected to the host computer 3. The photon detector 21 collects the single photon information generated within the sample flow cell 11 through the inverted microscope 22 and sends this information to the host computer 3. Thus, the photons emitted by the electrochemical reaction are efficiently absorbed by the high-power oil immersion lens and efficiently detected by the electron-multiplying photon detector. By controlling the reaction concentration and exposure time, spatially and temporally isolated a single photon signal can be collected. In actual operation, the photon detector 21 can be an electron-multiplying photon detector or a complementary metal-oxide-semiconductor photon detector, but not limited to these.

In some embodiments, as shown in Figure 1, the electrochemiluminescence unit 1 further comprises: a data acquisition card 12, a reference electrode 13, a counter electrode 14, and a working electrode 15. The data acquisition card 12 is electrically connected to the reference electrode 13, counter electrode 14, working electrode 15, and host computer 3. The reference electrode 13, counter electrode 14, working electrode 15 are set on the sample flow cell 11. This forms a three-electrode trigger control system for the electrochemiluminescence unit 1. Its working process involves the data acquisition card 12 sending voltage signals to the working electrode 15 and counter electrode 14, so that the reactants can undergo electrochemical reactions within the sample flow cell 11 and generate a single photon, and the data acquisition card 12 collects the electrochemical luminescence unit 1's current information through the counter electrode 14 and sends this current information to the host computer 3 for display. This achieves electrochemical detection of the electrochemiluminescence process.

Preferably, as shown in Figure 1, the electrochemiluminescence unit 1 also comprises a current amplifier 16. The counter electrode 14 is electrically connected to the data acquisition card 12 through the current amplifier 16, used to send the electrochemiluminescence unit 1's current information to the data acquisition card 12. In actual operation, an appropriate amplification gain is selected based on the current size. The principle for selecting the gain is to choose as large a gain as possible without overloading the current amplifier 16. The current value measured by the data acquisition card 12 is obtained by dividing the value amplified and converted to voltage by the current amplifier 16 by the selected gain.

Further preferably, a preset voltage value is established within the host computer 3. The data acquisition card 12 collects the voltage across the reference electrode 13 and the working electrode 15 and sends the collected voltage value to the host computer 3. The host computer 3 compares the voltage value sent by the data acquisition card 12 with the preset voltage value and controls the data acquisition card 12 to adjust the voltage signals sent to the working electrode 15 and the counter electrode 14 based on the comparison results. The data acquisition card 12 outputs analogue voltage signals to both ends of the working electrode 15 and the counter electrode 13 at the same time as it measures and inputs to the data acquisition card 12 the voltages at both ends of the reference electrode 13 and the working electrode 15. The difference between the measured voltage and the preset voltage is calculated, and the host computer 3 controls the data acquisition card 12 to adjust the voltage signals sent to the working electrode 15 and the counter electrode 14 according to the difference so that the difference is less than 0.001V.

**Embodiment 2: Super-Resolution Electrochemiluminescence Imaging**

The invention provides an electrochemiluminescence imaging method, using the electrochemiluminescence imaging system described in Embodiment 1, including voltage application, imaging steps, and analyzing results to determine resolution.

The imaging steps includes: S100, sequentially and continuously collecting, by the optical acquisition unit, the first spatio-temporal information of the single photon, the second spatio-temporal information, ..., the Nth spatio-temporal information within the sample flow cell, and consecutively transmitting the spatio-temporal information of the single photon to the host computer. S200, processing, by the host computer, the received first spatio-temporal information, the second spatio-temporal information, ..., the Nth spatio-temporal information to produce an image, where N is an integer greater than 1.

Compared to traditional fluorescence imaging methods, since it avoids the interference of excitation light on the imaging background by using voltage-induced luminescence and detecting with photodetectors, the background can be reduced to close to 0 and the signal-to-noise ratio of single-photon detection can be greater than 5. The results are shown in Figure 2, where a refers to the background value of different imaging methods, b refers to its background noise value, the imaging noise is defined as the standard deviation of its background value, and c is the signal-to-noise ratio of a single photon in different imaging methods. Therefore, the present invention can achieve high signal-to-noise ratio detection of the single photons.

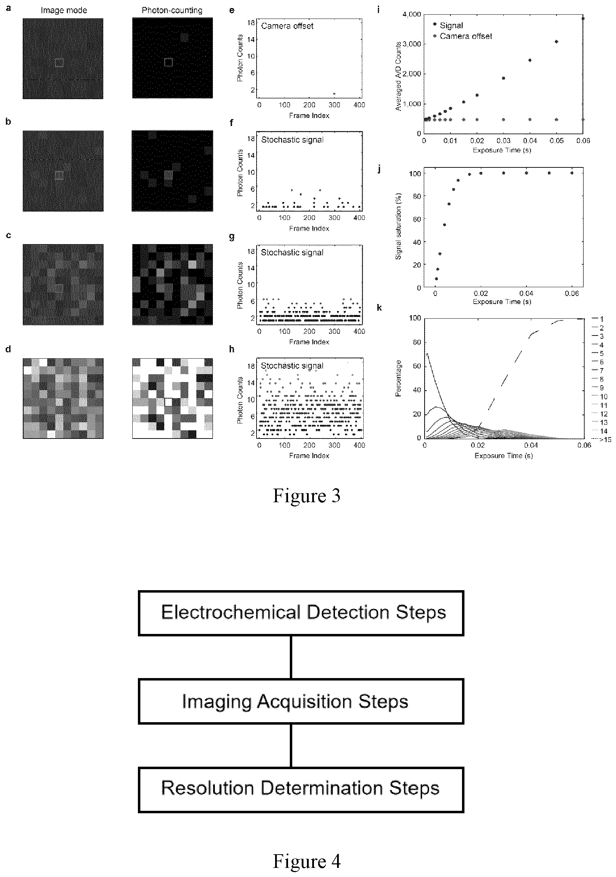

The detected single photon signal is shown in Figure 3. Figure 3a shows the background value when the exposure time is 0.507ms. Figure 3b-d shows the ECL imaging signals when the exposure time is 0.507 ms, 4 ms and 15ms. Figure 3e-h is a counting diagram of the number of photons detected by the framed pixel corresponding to ad within 400 frames. Figure 3i shows the average intensity within the entire field of view under different exposure times. Figure 3j shows the percentage of pixels with detected signals to total pixels in the next frame at different exposure times. Figure 3k shows the relationship between the statistical distribution of the number of detected photons and the exposure time.

The flow chart of the imaging method can be shown by Figure 4.

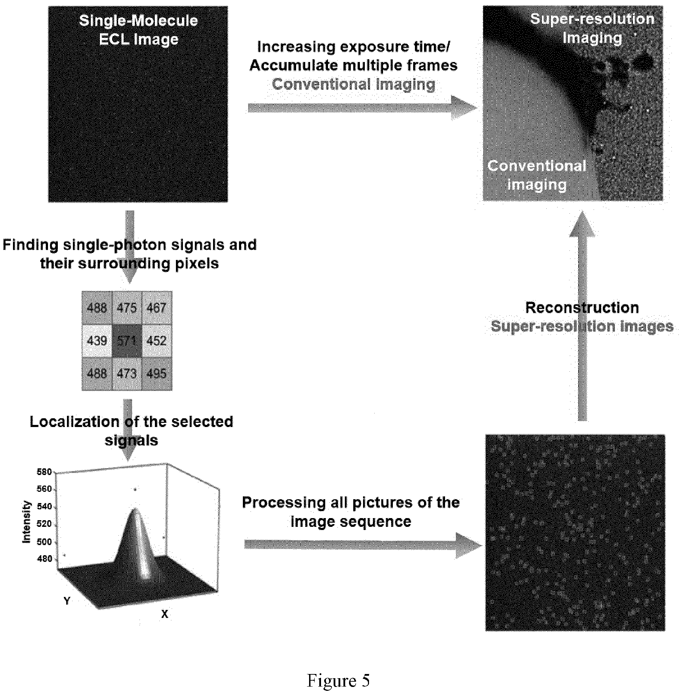

Figure 5 is a schematic diagram of the positioning processing of single-photon signal imaging information and the reconstruction method of super-resolution images.

Specifically, in step S 100, the collected spatio-temporal information of the single photon generated at the first moment comprises the pixel of the single photon at the first moment and the grayscale values of 8 pixels adjacent to the first moment; the collected spatio-temporal information of the single photon generated at the second moment comprises the pixel of the single photon at the second moment and the grayscale values of 8 pixels adjacent to the second moment; ...; the collected spatio-temporal information of the single photon generated at the Nth moment (Figure 5a) comprises the pixel of the single photon at the Nth moment and the grayscale values of 8 pixels adjacent to the Nth moment (Figure 5b). Preferably, step S200 comprises: S210, fitting the spatial position information of the single photon at the first moment, comprising the pixel and grayscale values of 8 pixels adjacent to the first moment, with a two-dimensional Gaussian, to obtain the first position coordinate of the single photon at the first moment; fitting the spatial position information of the single photon at the second moment, comprising the pixel and grayscale values of 8 pixels adjacent to the second moment, with a two-dimensional Gaussian, to obtain the second position coordinate of the single photon at the second moment;...; fitting the spatial position information of the single photon at the Nth moment (Figure 5c), comprising the pixel and grayscale values of 8 pixels adjacent to the Nth moment, with a two-dimensional Gaussian, to obtain the Nth position coordinate of the single photon at the Nth moment. S220, based on the first, the second, ..., the Nth position coordinates, generating an image (Figure 5d). Preferably, Step S210 further comprises: analyzing the standard deviation corresponding to the position coordinates of the single photon or isolated, low quantities of photons at each moment or certain moments, accumulating signals after fitting, merging identical signals, and noise reduction processing, thereby determining the position coordinates of the single photon at different times and generating a super-resolution image of electrochemiluminescence, resulting in improved resolution, clearer image and surpassing the Abbe optical diffraction limit in resolution (Figure 5e).

Preferably, after the imaging steps, resolution determination steps are performed.

The resolution determination steps comprise: S 100', grouping the first position coordinate, the second position coordinate, ..., and the Nth position coordinate into two statistically significant sets: $\hat{f}_1(\vec{q})$ and $\hat{f}_2(\vec{q})$ respectively

$$FRC(q) = \frac{\sum \vec{q} \in circle \, \hat{f}_1(\vec{q}) \, \hat{f}_2(\vec{q})^*}{\sqrt{\sum \vec{q} \in circle \, \left|\hat{f}_1(\vec{q})\right|^2} \sqrt{\sum \vec{q} \in circle \, \left|\hat{f}_2(\vec{q})\right|^2}}$$

S200', calculation resolution FRC(q).

This achieves the calculation of the resolution of the generated image.

In practical application, the optical acquisition unit comprises a photon detector and an inverted microscope. The sample flow cell is placed on the inverted microscope, and the photon detector is fixed together with the inverted microscope and connected to the host computer. The photon detector is configured to collect signals from the single photon generated within the sample flow cell through the inverted microscope and transmits the single photon to the host computer. The inverted microscope is equipped with a high-power oil immersion objective lens. In the process of determining resolution, following step S200', the procedure comprises: S300', comparing the resolution FRC(q) calculated in step S200' with the Abbe diffraction limit S. If FRC(q) < S, it is considered super-resolution, where $S=0.61\times\lambda/NA$, $\lambda$ is the imaging wavelength, NA is the numerical aperture of the high-power oil immersion objective lens. Using such a technical solution can accurately determine whether the imaging is super-resolution.

In some embodiments, as shown in Figure 4, prior to the imaging steps, an electrochemical detection step is performed. The electrochemical detection step comprises:

S100", applying, by the electrochemiluminescence unit, voltage to the sample flow cell to induce electrochemical reactions in the reactants within the cell, releasing single photo; and S200", collecting, by the electrochemiluminescence unit, current information from the sample flow cell and transmits this information to the host computer.

Specifically, the electrochemiluminescence unit further comprises a data acquisition card, a reference electrode, a counter electrode, and a working electrode. The data acquisition card is electrically connected to the reference electrode, the counter electrode, the working electrode, and the host computer, the reference electrode, the counter electrode, and the working electrode are positioned on the sample flow cell. Step S100" comprises the data acquisition card outputting analog voltage signals to both ends of the working electrode and the counter electrode, to input voltage into the sample cell, causing the reactants in the sample cell to emit photons. This method enables the electrochemiluminescence unit to form a three-electrode trigger control system, and controls the reactants in the sample flow cell to emit photons through this system. Step S200" comprises the data acquisition card collecting the current information of the electrochemiluminescence unit through the counter electrode and transmitting this current information to the host computer, to realize electrochemical detection during the electrochemiluminescence process. It should be noted that the specific method of controlling the reactants in the sample flow cell to emit photons is not limited to the above technical solutions. The potential of the reference electrode can also be defined as the potential zero point through the custom reference function of the data acquisition card. By directly applying voltage to the working electrode and the counter electrode through the analog output interface, the voltage of the three-electrode system can be applied. Electrochemical measurements can also be achieved through electrochemical workstations (potentiostats, double potentiostats), etc.

Preferably, the electrochemiluminescence unit further comprises a current amplifier, with the counter electrode electrically connected to the data acquisition card through the current amplifier; step S200" comprises the current information of the electrochemiluminescence unit being amplified by the current amplifier before being transmitted to the data acquisition card. The detailed working principle of this step may refer to the description in Embodiment 1.

In some embodiments, a preset voltage value is stored in the host computer. Step S100" comprises the data acquisition card collecting the voltage across the reference electrode and the working electrode and sending the collected voltage value to the host computer; the host computer compares the voltage value from the data acquisition card with the preset voltage value and controls the data acquisition card based on the comparison result to adjust the analog voltage signal sent to the working electrode and the counter electrode. For the specific working principle of this step, please refer to the description in Embodiment 1.

**Embodiment 3: Micro-Nanostructure Imaging**

In order to demonstrate the imaging capability, the present invention adopts the micro-nano processing method of focused ion beam etching to process a template of a known structure for the ITO electrode in advance, and perform electrochemiluminescence imaging on it.

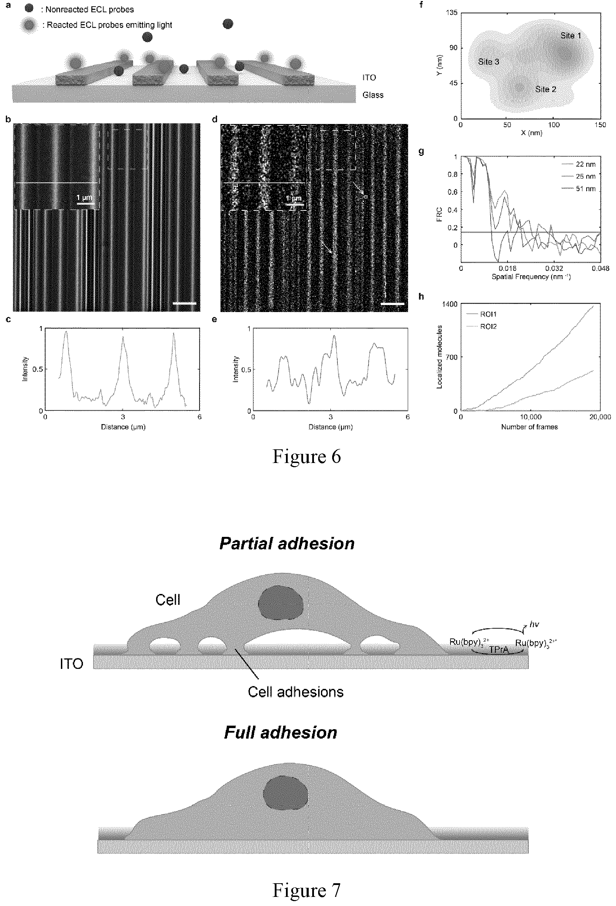

As shown in Figure 6, it can be clearly seen the single-molecule ECL imaging and the acquisition signals of the single photon or isolated, low quantities of photons on the micro-nanostructured indium tin oxide (ITO) electrode of the present invention, where the surface of the micro-nanostructured indium tin oxide (ITO) electrode is first carefully characterized using a scanning electron microscope.

Figure 6 illustrates single-molecule ECL imaging of ITO structure. Figure 6a illustrates the collision between the ITO imaging template with known structure and a single ECL probe molecule. The ruthenium complex probe is free in the solution and emits light in the confined area of the electrode surface after ITO surface collision and ECL reaction. Figure 6b illustrates SEM image of FIB patterned ITO, where scale bar is 3 $\mu$m. Figure 6c illustrates intensity distribution of the lines indicated in Figure 6b. Figure 6d illustrates super-resolution single-molecule ECL image of the same FIB patterned ITO shown in Figure 6b. Figure 6e illustrates intensity distribution of the lines indicated in Figure 6d. Figure 6f illustrates representative clusters of three reaction sites. Figure 6g illustrates FRC quantification of image resolution from 3 randomly selected regions of interest (ROI). Figure 6h illustrates quantitative localization analysis of selected ROI (300 nm × 300 nm, indicated by white arrows) on FIB patterned ITO coverslip. ROI 1 is located on the ITO surface, and ROI 2 is located on the insulating part of the glass layer.

The above results demonstrate a new type of super-resolution microscopy that does not require laser excitation. Although the current imaging subjects are still confined to electrode surfaces, future strategies involving separate optical paths or point spread function engineering may achieve three-dimensional imaging. Since ECL avoids laser use, background can be minimized to the level of camera bias, offering ultra-high sensitivity for single photon detection (Figure 2). In addition, single-molecule ECL can be controlled spatiotemporally by the magnitude of the applied voltage, making it suitable for dynamic imaging.

**Embodiment 4: Biological imaging**

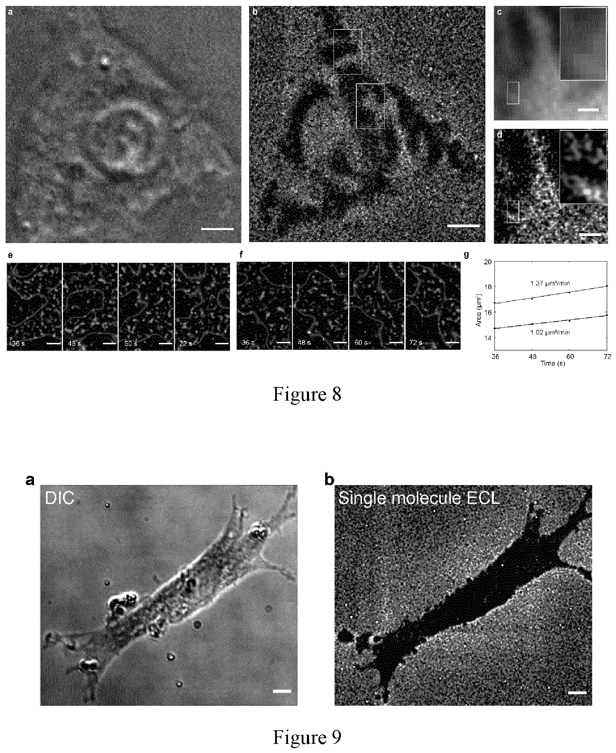

The present invention further uses single-molecule ECL for cell imaging. Cell adhesion to the cell growth matrix is an important process in many fundamental biological processes, such as cell migration and proliferation. Imaging adhesions of living cells requires a technique that combines both spatio-temporal resolution. Several super-resolution fluorescence microscopy techniques have been proved to meet these living cell imaging requirements. Although super-resolution fluorescence microscopy is compatible with physiological manipulations, the use of fluorescent labels for adhesion proteins is tedious and detrimental to physiological processes in living cells. ECL microscopy has been shown to avoid such direct labeling issues for single-cell imaging (see Figure 7, Schematic illustrating negative contrast ECL imaging of cell adhesion. Figure 7a, partial adhesion. Figure 7b, complete adhesion.) The insufficient resolution of traditional ECL limits its application to study more detailed adhesion structures. When cell adhesion is imaged by single-molecule ECL, single cells (Figure 8a) are imaged directly on the ITO surface (Figure 8b). The cell adhesion region hinders the diffusion of ECL reactants into the ITO and results in dark contrast compared to the exposed ITO surface, allowing imaging of adhesion sites without direct labeling of adhesion proteins. In contrast to specific fluorescence imaging of labeled protein clusters, single-molecule ECL microscopy can image overall cell adhesion rather than specifically labeled proteins. Due to the advantages of sensitivity and temporal resolution, the present invention can effectively use ECL signals for image reconstruction at relatively fast imaging speeds. Living HEK 293 cell super-resolution ECL images, as shown in Figures 8b and 8d, reveal specific information contrasting with bright-field images and traditional ECL images (Figures 8a and 8c). The invention further explored dynamic processes of cell adhesion and observed adhesion area movement rates, with time resolution at 12 seconds and spatial resolution at 150 nanometers, surpassing the Abbe diffraction limit. This resolution can already compare with optimized super-resolution fluorescence microscopy methods for imaging adhesion sites. Based on the analysis of dynamic processes, the invention obtains average velocities of selected adhesion areas, where the area in Figure 8e moves at 1.37 $\mu$m$^2$min$^{-1}$ and the area in Figure 8f moved at 1.02 $\mu$m$^2$min$^{-1}$.

Figure 9 shows the fixed DIC and single-molecule ECL imaging of PC12 cells. Figure 9a, DIC image. Figure 9b, single-molecule ECL image. The image was reconstructed from 15000 frames with an exposure time of 10 ms. Scale bar: 5 $\mu$m.

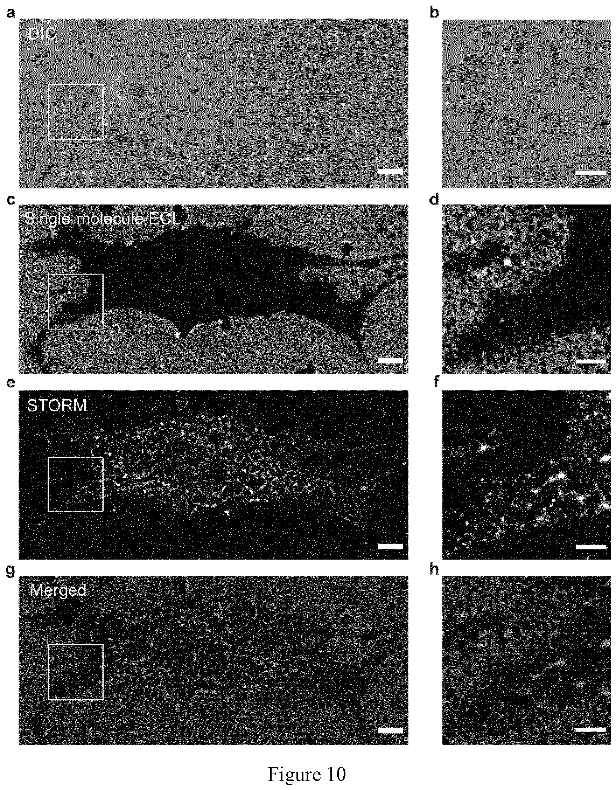

Comparing super-resolution fluorescence imaging of fixed cells (Figure 10) and single-molecule ECL imaging confirmed the feasibility of single-molecule ECL in super-resolution imaging of cell adhesion, as shown in Figure 10.

Figure 10 is the comparison of DIC, single-molecule ECL and super-resolution fluorescence microscopy STORM images of the same PC 12 cells. Figure 10a-b, DIC images of PC 12 cells. Figure 10e-f, STORM images. Figure 10g-h, merged single-molecule ECL and STORM images. The scale bar of Figure 10a, Figure 10c, Figure 10e, and Figure 10g is 5 $\mu$m, and the scale bar of Figure 10b, Figure 10d, Figure 10f, and Figure 10h is 2 $\mu$m. Comparative imaging experiments performed on the same PC 12 cells are performed with the following procedures: cell fixation, DIC/BF imaging, single-molecule ECL imaging, membrane lysis of fixed cells, fluorescent labeling of adhesion proteins, and STORM imaging. The overall correlation between different imaging techniques is shown in Figure 10. Adhesions comprise many different types (>100) of protein complexes, and the STORM imaging in this invention highlights only one type of protein complex. Therefore, STORM imaging demonstrates only one type of possible adhesion site. On the other hand, single molecule ECL imaging reveals the overall adhesion structure.

An experimental scheme for cell imaging using the invention's method, note that this embodiment is for illustrative purposes of the patent and does not limit its specific implementation conditions:
Chemicals: Tris(2,2'-bipyridine) dichlororuthenium(II) hexahydrate, tripropylamine, sodium dihydrogen phosphate dihydrate, and disodium hydrogen phosphate dodecahydrate are prepared by deionized (DI) water.

The device used by the invention is operated on an inverted microscope. Photons emitted from the electrochemical reaction are collected by an objective lens with a numerical aperture of 1.49 and detected by a water-cooled EMCCD camera, with an EM gain of 500.

A three-electrode electrochemical system is used to record the electrochemical luminescence reaction. Ag/AgCl and Pt plate (15 mm × 15 mm × 0.1mm) are used as reference and counter electrodes, respectively. ITO is used as the working electrode. A voltage of 1.4 V (relative to Ag/AgCl) is applied to trigger the ECL reaction. An electrolyte containing 50 mM and different concentrations of phosphate buffer (0.15 M, pH 7.4) is used.

A data acquisition card is used for feedback voltage control and associated data acquisition from a low-noise current amplifier with a custom-programmed control interface. Electrochemical luminescence reaction current recording and image data collection (EMCCD camera) are synchronized using TTL (+5V) signals.

Imaging templates were fabricated on 240 nm thick ITO cover slips by operating with a focused ion beam at 30 kV under a 120 pA ion beam. The patterned ITO cover slips were placed in an electrochemical cell containing 50 mM. Due to the effects of ion beam and uneven surface activity of different ITO samples, voltage (1.2 V - 1.6 V) and different concentrations (10 $\mu$M - 210 $\mu$M, depending on different FIB samples, as the ion beam interaction with ITO can deplete the active ITO layer) need to be adjusted based on imaging feedback from experimental event rates for optimized random single molecule observation. Note that generally higher concentrations of are required for FIB-treated ITO samples to achieve comparable event rates to sputtered ITO samples. For super-resolution electrochemical luminescence imaging, a TIRF objective with a numerical aperture of 1.45 is used. The EMCCD's exposure time is 5.6 ms per frame, with a field of view of 27.3 $\mu$m $\times$ 27.3 $\mu$m. Imaging data are located through integrated Gaussian function fitting to luminescent molecules, and then super-resolution images are reconstructed through overlapping single molecule localization. Custom filters are applied to super-resolution images to remove artifacts.

Human embryonic kidney cells (HEK 293) are cultured in high glucose DEME medium (4.5g/L glucose, phenol red-free) at 37 °C and 5% $CO_2$. The medium is supplemented with 10% normal fetal bovine serum and 1% penicillin-streptomycin mixture. For living cell experiments, HEK 293 cells are digested with trypsin-EDTA solution for 5 minutes and then transferred to ITO cover slips that have been sterilized in 75% alcohol for 10 minutes and evaporated over fire. The transferred cells are then cultured in DEME medium (phenol red-free) at 37 °C and 5% $CO_2$ for 24 hours. All cell culture reagents are provided by Shenggong Biotechnology Co., Ltd. A 60$\times$ objective (NA = 1.49) is used for super-resolution ECL imaging of living cells. Before ECL imaging experiments, ITO cover slips with cells are washed with PBS buffer 3 times to remove residual culture medium. ECL imaging experiments are conducted under a 1.2 V pulse voltage (frequency: 1 Hz), with 100 $\mu$M and 50 mM in 1 $\times$ PBS buffer. The exposure time for each frame is 3.013 milliseconds. After recording for 129 seconds, a total of 40,000 frames are collected, of which 20,000 frames are without voltage, serving as a background reference for data analysis. For fixed cell imaging, cells are first fixed with 4% polyformaldehyde (PFA) in PBS solution at 4°C, followed by immunolabeling and associated super-resolution optical fluorescence STORM imaging.

Single-molecule ECL microscopy can potentially develop visualizing techniques for cellular structures through labeled ECL probe molecules. Like fluorescence, amplifying the emitted photons from labeled probe molecules in multiple excitation processes in ECL can further enhance imaging capabilities and specificity. While ECL avoids issues caused by lasers (such as photobleaching and autofluorescence), the use of voltage and ECL probes may similarly affect cells. Nonetheless, the invention believes the advantages of single molecule ECL in terms of sensitivity can serve as an alternative and supplement to fluorescence methods for single molecule imaging. Based on spatial and temporal isolation of single reaction events, the invention manages to make significant improvements in observing aqueous electrochemical reactions by directly detecting a single photon emission produced. Finally, super-resolution ECL imaging applications in bioassays and cell imaging are achieved.

**Embodiment 5: Micro-nanoscale electrochemical measurement**

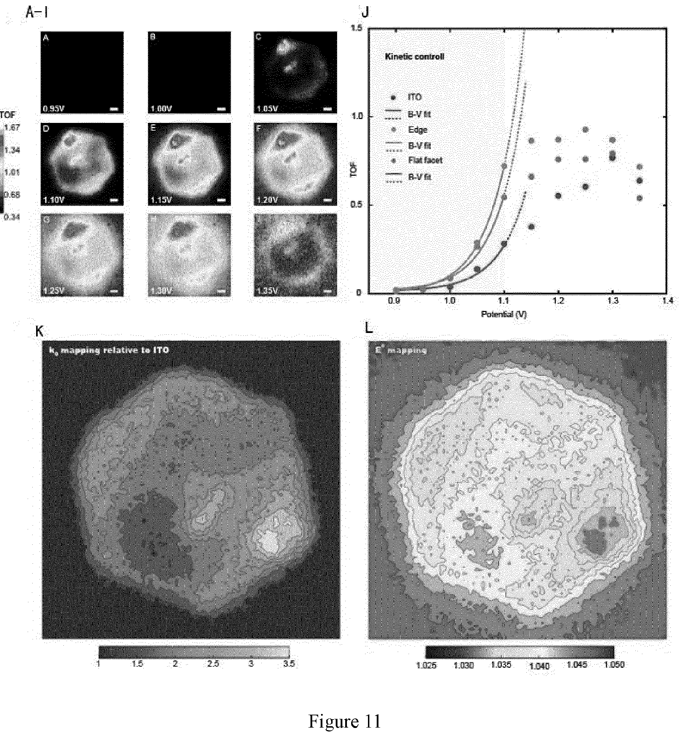

Since the ECL reaction mechanism determines that one electron corresponds to one photon emission conversion relationship, by establishing the frequency detected by the isolated photon, it can be related to the electron transfer rate. Exploring the relationship between applied voltage and the frequency detected by corresponding photons, using the Butler-Volmer (B-V) equation in electrochemistry to fit the super-resolution scale region in space, the intrinsic kinetic constant of the electrochemical reaction can be obtained, relative to the numerical value of the substrate, and the equilibrium potential generated by the reaction can be obtained. The effect is shown in Figure 11. Figures 11A-I illustrate spatial distribution diagrams of photon detection frequencies under different voltages. Figure 11J illustrates the relationship between photon detection frequency and voltage at different selected positions, and the corresponding B-V equation fitting. Figure 11K illustrates the fitted values of the intrinsic kinetic constants in different regions relative to the substrate. Figure 11L illustrates the fitted equilibrium potential when the chemical reaction occurs.

**Embodiment 6: Characterization method of catalyst**

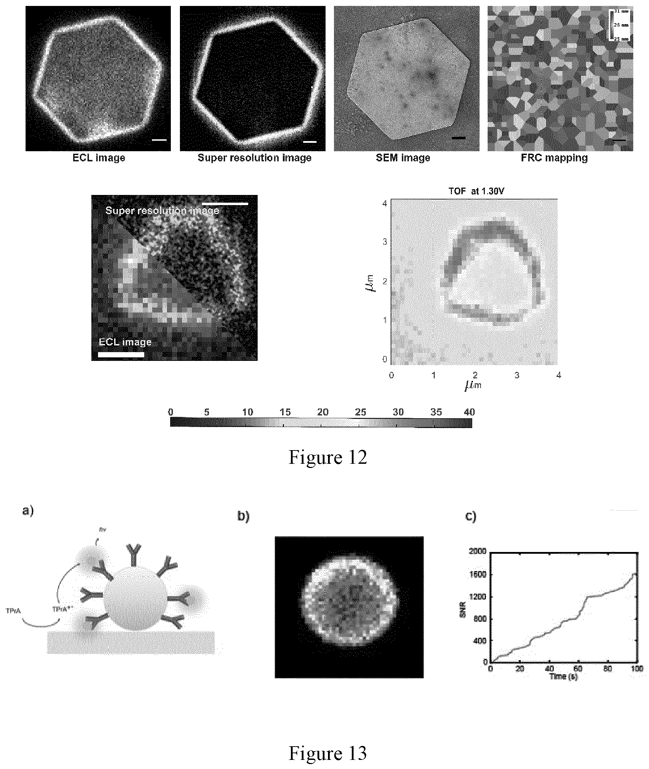

Turnover frequency is commonly used as an indicator of catalyst catalytic activity during catalyst characterization. That is, the number of substrate molecules that the catalyst catalyzes per unit time at a single site. For the experiments of the present invention, the present invention can achieve imaging of the active sites on the catalyst surface by calculating the number of photons per unit time to obtain the turnover frequency at different positions through the one-to-one correspondence between the number of photons in the reaction mechanism and the reaction cycle. and assessment of catalytic activity. The results are referenced in Figure 12. Figure 12a illustrates the conventional ECL image, Figure 12b shows the super-resolution ECL imaging result, Figure 12c demonstrates the associated scanning electron microscope image, and Figure 12d is the FRC resolution result. The resolution is <31nm, surpassing the Abbe diffraction limit. Figure 12e is an imaging comparison diagram between traditional ECL imaging and super-resolution ECL, and Figure 12f is a measurement diagram of the turnover frequency at 1.3V corresponding to e.

**Embodiment 6: Highly sensitive immunoassay**

Based on the existing magnetic bead immuno-electrochemiluminescence detection scheme combined with single molecule reaction signal detection, ultra-low concentration substances in solutions can be detected and quantified. By integrating this with localization information, the number of molecules on a single bead can be quantified through the number of localization points. With long-term signal accumulation, the signal-to-noise ratio (SNR) of a single molecule detected on a single bead can exceed 1500 (SNR>1500) within 100 seconds, achieving ultra-high sensitivity for single molecule detection. The results are referenced in Figure 13. Figure 13a illustrates the principle, Figure 13b shows the ECL image, and Figure 13c demonstrates the relative ultra-high signal-to-noise ratio after 100 seconds of accumulation for a single molecule.

Using this method, existing commercial electrochemiluminescence reagent kits can achieve single molecule-level detection, significantly expanding the detection limits of existing technologies. Thus, it can be used for early disease diagnosis, trace detection of biological samples such as viruses, prenatal gender and genetic disease analysis, and forensic detection and quantification of explosives or biological traces, achieving extremely high detection sensitivity.

Similarly, the electrochemiluminescence technology described in this application can also be used for characterizing surface chemical structures or similar biological imaging and characterization.

**Embodiment 7: A single photon Source or Quantum Light Source Based on Chemiluminescent Reactions**

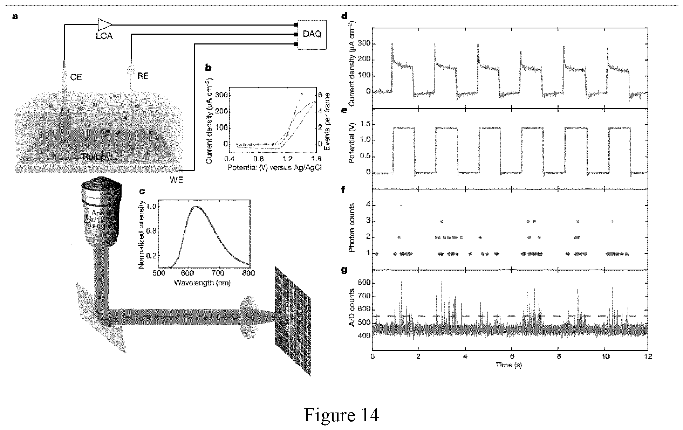

A single photon sources or quantum light sources require the luminescence system to only emit a single photon during its spontaneous radiation lifetime. The main approach to implementing single photon sources in prior art is to use photoluminescence and electroluminescence. This invention proposes using chemiluminescent reactions as a pathway to generate a single photon source. Specifically, taking electrochemiluminescence reactions as an example, as illustrated in Figure 14a, a schematic diagram of an electrochemical luminescence reaction detection device for generating a single photon, and Figures 14b-g show the electrochemical luminescence measurement results. For electrochemiluminescence reactions, by controlling at least any of the reaction condition parameters such as reactant concentration, temperature, electrode activity, voltage, voltage regulation mode, a single photon signal is generated during its spontaneous radiation lifetime. In this embodiment, an electrochemiluminescence reaction system in which the reactant is ruthenium terpyridine-tripropylamine is taken as an example. The concentration range of ruthenium terpyridine is: 1 picomole per liter to 2 mmol per liter; the concentration range of tripropyline is: 1 picomole. Each liter reaches 200 millimoles per liter, causing the electrochemiluminescence reaction to generate a single-photon signal that is relatively isolated temporally and spatially, and can be used as a single-photon source. Figure 14f demonstrates the detection of a single photon signal from single molecule electrochemical luminescence reactions after spatio-temporal control. Although the invention takes electrochemical luminescence reactions as an embodiment, other chemiluminescence systems capable of producing a single photon emission satisfying single emission per reaction cycle can also serve as a single photon sources or quantum light sources, achieving similar effects.

Although the ruthenium terpyridine-tripropylamine electrochemiluminescence system is as an example, it is not limited to this electrochemiluminescence probe system. Similarly, the electrochemiluminescence reaction system can be implemented with the following combinations. The electrochemiluminescence reaction system's luminescence agents may comprise transition metal coordination compounds like tris(bipyridine)ruthenium or tris(bipyridine)iridium and their derivatives including carboxyl-modified tris(bipyridine)ruthenium, carbon-based materials such as carbon quantum dots, polymer carbon dots, and graphene quantum dots, chemiluminescent probes like luminol, its derivatives, acridinium esters, and their derivatives, polycyclic aromatic hydrocarbons such as 9,10-diphenylanthracene and its derivatives, as well as nanoparticles including gold nanoparticles, quantum dots, metal-organic frameworks, covalent organic frameworks, and luminous materials affixed to nanoparticles. The co-reactant in the electrochemiluminescence reaction system can be reducing agents such as tripropylamine or oxidizing agents such as hydrogen peroxide. Specifically, for certain reactions that occur through annihilation mechanisms, where the same ion undergoes oxidation and reduction reactions at the anode and cathode respectively, and the oxidized and reduced products can continue to chemically react and emit light, these molecules can be used as luminous probes without adding extra co-reactants, such as tris(bipyridine)ruthenium, 9,10-diphenylanthracene, etc. Specifically, for some small molecules (molecular weight less than 1000) like luminol and its derivatives, it is possible to design systems that allow the applied voltage to be reduced to 0 V experimentally.

The electrochemiluminescence imaging method in this invention only requires the luminescence system to provide photon signals. Therefore, it does not depend on the specific electrochemical luminescence system itself. As long as electrochemical luminescence reactions that produce photon signals can be generated, similar effects to the tris(bipyridine)ruthenium-tripropylamine electrochemiluminescence system exemplified in this application can be achieved.

The above embodiments are only used to illustrate the present invention and are not used to limit the scope of the present invention. In addition, it should be understood that after reading the teaching of the present invention, those skilled in the art can make various changes or modifications to the present invention, and these equivalent also fall within the scope defined by the appended claims of the present invention.

**Claims**

1. A method for collecting signals from a single photon or isolated, low quantities of photons through electrochemiluminescence, comprising an electrochemiluminescent reaction system and a photon signal collection system; the system triggers an electrochemiluminescent reaction; **characterized in that** the photon signal collection system is configured to collect signals from the single photon or isolated, low quantities of photons released by the electrochemiluminescent reaction, wherein the single photon or isolated, low quantities of photons is originated from single-molecule electrochemical reactions.

2. An imaging system for electrochemiluminescence for the method of claim 1, **characterized by** comprising: an electrochemiluminescence unit (1), an optical acquisition unit (2), and a host computer (3); the electrochemiluminescence unit (1) comprises a sample flow cell (11) having reactants that undergo electrochemical reactions within the cell (11), emitting signals from the single photon or isolated, low quantities of photons; the optical acquisition unit (2) is positioned corresponding to the sample flow cell (11) and is electrically connected to the host computer (3); the optical acquisition unit is configured to collect signals from the single photon or isolated, low quantities of photons and sequentially transmits the single photon or isolated, low quantities of photons to the host computer (3); the host computer (3) is configured to generate images based on the received single photon or isolated, low quantities of photons. The images are super-resolution electrochemiluminescence images, surpassing the Abbe optical diffraction limit in resolution.

3. The electrochemiluminescence imaging system according to claim 2, **characterized in that** the optical acquisition unit (2) comprises a photon detector (21) and a microscopic imaging system (22); the sample flow cell (11) is placed on the microscopic imaging system (22), and the photon detector (21) is fixed together with the microscopic imaging system (22) and connected to the host computer (3); the photon detector (21) is configured to collect signals from the single photon or isolated, low quantities of photons generated within the sample flow cell (11) through the microscopic imaging system (22) and transmits the single photon or isolated, low quantities of photons to the host computer (3).

4. The electrochemiluminescence imaging system according to claim 3, **characterized in that** the microscopic imaging system (22) is equipped with an objective lens.

5. The electrochemiluminescence imaging system according to claim 3, **characterized in that** the photon detector (21) is an electron-multiplying camera, a complementary metal-oxide-semiconductor camera, a photomultiplier tube, an avalanche photodiode, or a high-sensitivity photoelectric detector and arrays with similar functionality.

6. The electrochemiluminescence imaging system according to any one of claims 2-5, **characterized in that** the electrochemiluminescence unit (1) further comprises: a data acquisition card (12), a reference electrode (13), a counter electrode (14), and a working electrode (15); or a common electrochemical workstation or a device capable of triggering an electrochemical luminescence reaction through similar voltage application functions; the data acquisition card (12) is interconnected with the reference electrode (13), the counter electrode (14), the working electrode (15), and the host computer (3), with the reference electrode (13), the counter electrode (14), and the working electrode (15) positioned in the sample flow cell (11); the data acquisition card (12) is configured to apply voltage signals to the working electrode (15) and the counter electrode (14), and to collect the current information of the electrochemiluminescence unit (1) through the counter electrode (14), to transmit the current information to the host computer (3);preferably, the electrochemical workstation is interconnected with the reference electrode (13), the counter electrode (14), the working electrode (15), and the host computer (3), and these electrodes are positioned on the sample flow cell (11); devices capable of applying voltage to trigger electrochemical luminescence reactions are interconnected with the reference electrode (13), the counter electrode (14), the working electrode (15), and the host computer (3), with the electrodes positioned on the sample flow cell (11); preferably, the counter electrode (14) and the reference electrode (13) are capable of being replaced by a single counter electrode to achieve the same effect.

**7.** The electrochemiluminescence imaging system according to claim 6, **characterized in that** the electrochemiluminescence unit (1) further comprises a current amplifier (16); the counter electrode (14) is electrically connected to the data acquisition card (12) through the current amplifier (16), facilitating the transmission of current information from the electrochemiluminescence unit (1) to the acquisition card (12); preferably, the current amplification function realized by the current amplifier is capable of being substituted by common electrochemical workstations or other devices capable of current collection.

**8.** An imaging method for electrochemiluminescence, **characterized by** the following steps:
using the electrochemiluminescence imaging system according to any one of claims 2 to 7, the imaging steps comprises:

S100, sequentially and continuously collecting, by the optical acquisition unit, the spatial position information of the single photon or isolated, low quantities of photons generated at the first moment, the second moment, ..., the Nth moment within the sample flow cell, and consecutively transmitting the spatial position information of the single photon or isolated, low quantities of photons to the host computer;
S200, processing, by the host computer, the received spatial position information of the single photon or isolated, low quantities of photons generated at the first, second, ..., the Nth moment to produce an image; the image is a super-resolution image of electrochemiluminescence, with a resolution surpassing the Abbe diffraction limit of optical imaging, where N is an integer greater than 1.

**9.** The electrochemiluminescence imaging method according to claim 8, **characterized in that**: in step S100, the collected spatial position information of the single photon or isolated, low quantities of photons generated at the first moment comprises the pixel of the single photon or isolated, low quantities of photons at the first moment and the grayscale values of multiple adjacent pixels; the collected spatial position information of the single photon or isolated, low quantities of photons generated at the second moment comprises the pixel of the single photon or isolated, low quantities of photons at the second moment and the grayscale values of multiple adjacent pixels; ... ; the collected spatial position information of the single photon or isolated, low quantities of photons generated at the Nth moment comprises the pixel of the single photon or isolated, low quantities of photons at the Nth moment and the grayscale values of multiple adjacent pixels;
preferably, step S200 comprises:

S210, fitting the spatial position information of the single photon or isolated, low quantities of photons at the first moment, comprising the pixel and grayscale values of adjacent pixels, with a two-dimensional Gaussian or a similar function possessing spatial localization capabilities, to obtain the spatial position information of the single photon at the first moment; fitting the spatial position information of the single photon or isolated, low quantities of photons at the first moment, comprising the pixel and grayscale values of adjacent pixels, with a two-dimensional Gaussian or a similar function possessing spatial localization capabilities, to obtain a second position coordinate of the single photon at the second moment; ...; fitting the pixel and grayscale values of adjacent pixels of the single photon at the Nth moment with a two-dimensional Gaussian or a similar function possessing spatial localization capabilities, to obtain a N*th position coordinate of the single photon at the Nth moment;
preferably, S220, based on the first, the second, ..., the Nth position coordinates, generating an image by overlaying the temporal and spatial positions of the single photon or isolated, low quantities of photons, resulting in a super-resolution image of electrochemiluminescence that breaks the temporal and spatial resolution limits of the Abbe optical diffraction limit.

**10.** The electrochemiluminescence imaging method according to claim 9, **characterized in that**:
step S210 further comprises: analyzing the standard deviation corresponding to the position coordinates of the single photon or isolated, low quantities of photons at each moment or certain moments, accumulating signals after fitting, merging identical signals, and noise reduction processing, thereby determining the position coordinates of the single photon at different times and generating a super-resolution image of electrochemiluminescence.

**11.** The electrochemiluminescence imaging method according to any one of claims 8-10, **characterized in that**: prior to the imaging steps, an electrochemical detection step is performed;
preferably, the electrochemical detection step comprises:

S100", applying, by the electrochemiluminescence unit, voltage to the sample flow cell to induce electrochemical reactions in the reactants within the cell, releasing single photon or isolated, low quantities of photons; and
S200", collecting, by the electrochemiluminescence unit, current information from the sample flow cell and transmits this information to the host computer.

12. The electrochemiluminescence imaging method according to claim 11, **characterized in that**: the electrochemiluminescence unit further comprises: a data acquisition card, a reference electrode, a counter electrode, and a working electrode; the data acquisition card is electrically connected to the reference electrode, the counter electrode, the working electrode, and the host computer, the reference electrode, the counter electrode, and the working electrode are positioned on the sample flow cell; step S100" comprises the data acquisition card outputting analog voltage signals to both ends of the working electrode and the counter electrode; step S200" comprises the data acquisition card collecting the current information of the electrochemiluminescence unit through the counter electrode and transmitting this current information to the host computer.

13. The electrochemiluminescence imaging method according to claim 12, **characterized in that**: the electrochemiluminescence unit further comprises a current amplifier, with the counter electrode electrically connected to the data acquisition card through the current amplifier; step S200" comprises the current information of the electrochemiluminescence unit being amplified by the current amplifier before being transmitted to the data acquisition card.

14. The electrochemiluminescence imaging method according to claim 12, **characterized in that**: a preset voltage waveform is stored in the host computer;
step S100" comprises the data acquisition card collecting the voltage across the reference electrode and the working electrode and sending the collected voltage value to the host computer; the host computer compares the voltage value from the data acquisition card with the preset voltage value and controls the data acquisition card based on the comparison result to adjust the analog voltage signal sent to the working electrode and the counter electrode.

15. A method for electrochemical measurement at the micro and nano scale, **characterized by** comprising:
using the method for collecting signals from the single photon or isolated, low quantities of photons through electrochemiluminescence of claim 1; or employing the electrochemiluminescence imaging system according to any one of claims 2-7; or employing the electrochemiluminescence imaging method according to any one of claims 8-14;
preferably, the electrochemical measurement method utilizes the single-photon signal collection and the electrochemiluminescence imaging method for optical signal reading in electrochemical measurement of current, potential, and other parameters.

16. A method for imaging micro and nanostructures, **characterized by** the imaging method comprising: utilizing the method for collecting signals from single photon or isolated, low quantities of photons through electrochemiluminescence according to claim 1; or employing the electrochemiluminescence imaging system according to any one of claims 2-7; or employing the electrochemiluminescence imaging method according to any one of claims 8-14.;
preferably, the micro and nanostructures can serve as electrode materials or materials loaded on electrodes for collecting signals from the single photon or isolated, low quantities of photons through electrochemiluminescence.

17. A method for characterizing catalysts, **characterized by** the catalyst characterization method comprising: utilizing the method for collecting signals from single photon or isolated, low quantities of photons through electrochemiluminescence according to claim 1; or employing the electrochemiluminescence imaging system according to any one of claims 2-7; or employing the electrochemiluminescence imaging method according to any one of claims 8-14.

18. A method for characterizing chemical structures on surfaces, **characterized by** the surface chemical structure characterization method comprising: utilizing the method for collecting signals from the single photon or isolated, low quantities of photons through electrochemiluminescence according to claim 1; or employing the electrochemiluminescence imaging system according to any one of claims 2-7; or employing the electrochemiluminescence imaging method according to any one of claims 8-14.

19. A method for biological imaging, **characterized by** the biological imaging method comprising: utilizing the method for collecting signals from the single photon or isolated, low quantities of photons through electrochemiluminescence according to claim 1; or employing the electrochemiluminescence imaging system according to any one of claims 2-7; or employing the electrochemiluminescence imaging method according to any one of claims 8-14.

20. An immunodetection method, **characterized by** the immunodetection method comprising: utilizing the method for collecting signals from the single photon or isolated, low quantities of photons through electrochemiluminescence according to claim 1; or employing the electrochemiluminescence imaging system according to any one of claims 2-7; or employing the electrochemiluminescence imaging method according to any one of claims 8-14.

21. A single-photon source or quantum light source based on chemiluminescence reactions, **characterized by** the single-photon source or quantum light source including a chemiluminescence reaction system, which is capable of emitting the single photon signal only during its spontaneous emission lifetime; the chemiluminescence reaction system undergoes a chemiluminescence reaction, and by controlling parameters such as the concentration of reactants and/or temperature among other reaction conditions within the chemiluminescence reaction, realizing the emission of the single photon signal during the spontaneous emission lifetime; preferably, the chemiluminescence reaction is an electrochemiluminescence reaction, wherein the emission of the single photon signal during the spontaneous emission lifetime is achieved by controlling at least one of the reaction condition parameters such as the concentration of reactants, temperature, electrode activity, voltage, and mode of voltage application in the electrochemiluminescence reaction; preferably, the reactants in the electrochemiluminescence reaction are a tris(bipyridine)ruthenium-tripropylamine system, with the concentration of tris(bipyridine)ruthenium ranging from 1 picomolar per liter to 2 millimolar per liter; the concentration of tripropylamine ranging from 1 picomolar per liter to 200 millimolar per liter.

Figure 1

Figure 2

Figure 3

Figure 4

Figure 5

Figure 6

**Partial adhesion**

**Full adhesion**

Figure 7

Figure 8

Figure 9

Figure 10

Figure 11

ECL image · Super resolution image · SEM image · FRC mapping

Figure 12

Figure 13

Figure 14

## INTERNATIONAL SEARCH REPORT

| International application No. |
| --- |
| **PCT/CN2021/144005** |

| A. | CLASSIFICATION OF SUBJECT MATTER |
| --- | --- |
| | G01N 21/76(2006.01)i; G01N 21/62(2006.01)i; G01N 27/30(2006.01)i |

According to International Patent Classification (IPC) or to both national classification and IPC

| B. | FIELDS SEARCHED |
| --- | --- |

Minimum documentation searched (classification system followed by classification symbols)
G01N21/-;G01N27/-

Documentation searched other than minimum documentation to the extent that such documents are included in the fields searched

Electronic data base consulted during the international search (name of data base and, where practicable, search terms used)
CNPAT, CNKI, WPI, EPODOC: 浙江大学, 冯建东, 董金润, 电化学, 发光, 光子, 单光子, 化学反应, 采集, 三联吡啶钌, 三丙胺, electrochemical, emission+, illumin+, photon, detect+, collect+, bipyridly ruthenium, propylamine

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | DONG, Jinrun et al. "Direct imaging of single-molecule electrochemical reactions in solution" *Nature,* Vol. 596, 11 August 2021 (2021-08-11), ISSN: 0028-0836, page 244, paragraph 1-page 248, paragraph 3 | 1-21 |
| X | CN 111996238 A (DERMATOLOGY HOSPITAL OF SOUTHERN MEDICAL UNIVERSITY (GUANGDONG PROVINCIAL DERMATOLOGY HOSPITAL, GUANGDONG PROVINCIAL CENTER FOR SKIN DISEASE AND STI CONTROL, CHINA LEPROSY CONTROL RESEARCH CENTER)) 27 November 2020 (2020-11-27) description, paragraphs [0081]-[0103], and figures 1-5 | 1-20 |
| X | CN 1392411 A (SOUTH CHINA NORMAL UNIVERSITY) 22 January 2003 (2003-01-22) description, page 1, paragraph 1-page 3, paragraph 2 | 21 |
| A | US 2017059547 A1 (ECOLE POLYTECHNIQUE FEDERALE DE LAUSANNE EPFL) 02 March 2017 (2017-03-02) entire document | 1-21 |
| A | CN 102539411 A (GUO LIANGHONG) 04 July 2012 (2012-07-04) entire document | 1-21 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 April 2022** | **05 May 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/144005**

### C. DOCUMENTS CONSIDERED TO BE RELEVANT

| Category* | Citation of document, with indication, where appropriate, of the relevant passages | Relevant to claim No. |
|---|---|---|
| A | VALENTI, Giovanni et al. "Single Cell Electrochemiluminescence Imaging: From the Proof-of-Concept to Disposable Device-Based Analysis" *J. Am. Chem. Soc.,* Vol. 139, No. 46, 24 October 2017 (2017-10-24), ISSN: 0002-7863, page 16830, paragraph 1-page 16837, paragraph 6 | 1-21 |
| A | 周镇宇 等 (ZHOU, Zhenyu et al.). "电化学发光成像技术及其在阵列传感分析和潜在指纹成像分析中的应用 (Electrochemiluminescence Imaging Focusing: Array Analysis and Visualization of Latent Fingerprints)" *电化学 (Journal of Electrochemistry),* Vol. 20, No. 6, 28 December 2014 (2014-12-28), ISSN: 1006-3471, page 506, paragraph 1-page 511, paragraph 2 | 1-21 |

Form PCT/ISA/210 (second sheet) (January 2015)

**INTERNATIONAL SEARCH REPORT**
Information on patent family members

International application No.

**PCT/CN2021/144005**

| Patent document cited in search report | | | Publication date (day/month/year) | Patent family member(s) | | | Publication date (day/month/year) |
|---|---|---|---|---|---|---|---|
| CN | 111996238 | A | 27 November 2020 | None | | | |
| CN | 1392411 | A | 22 January 2003 | CN | 1164938 | C | 01 September 2004 |
| US | 2017059547 | A1 | 02 March 2017 | EP | 3105584 | A1 | 21 December 2016 |
| | | | | WO | 2015121394 | A1 | 20 August 2015 |
| | | | | US | 10648965 | B2 | 12 May 2020 |
| | | | | EP | 3105584 | B1 | 12 August 2020 |
| CN | 102539411 | A | 04 July 2012 | None | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHANG et al.** *Annu. Rev. Anal. Chem.,* 2019, vol. 12, 275-95

- **NIEUWENHUIZEN et al.** *Nature Methods,* 2013, vol. 10, 557-562